# EUROPEAN PATENT APPLICATION

(11) **EP 4 737 753 A1**
(43) Date of publication of application: **06.05.2026**
(21) Application number: 24209380.5
(22) Date of filing: 29.10.2024
(51) Int. Cl.: F16D 1/116

(54) **ASSEMBLY SET FOR ASSEMBLING A COUPLING DEVICE**

(71) Applicant: ZF Friedrichshafen AG, 88046 Friedrichshafen (DE)
(72) Inventor: Dacej, Milan, 917 02 Trnava (SK); Dötschel, Philip, 88046 Friedrichshafen (DE)
(74) Representative: WBH Wachenhausen Patentanwälte PartG mbB

(57) **Abstract**

The present disclosure relates to an assembly set (3) for assembling a coupling device (1) for providing an axial coupling between a first portion (5) and a second portion (2) that are arrangeable coaxially along an axial axis. The assembly set (3) comprises the first portion (5), a retaining element (10) and a mounting device (12). The first portion (5) comprises a recess (8) configured to receive the retaining element (10) and at least one notch (16). The mounting device (12) comprises at least one engagement finger (14) for pressing the retaining element into the recess (8). The notch (16) extends towards the recess (8) for guiding the engagement finger (14) onto the retaining element (10) when the mounting device (12) is moved towards the first portion (5) along the axial axis during the assembly of the coupling device (1).

## Description

### Technical Field

The present disclosure relates to an assembly set for assembling a coupling device, as well as a planetary gearset assembled using such an assembly set, and a method for assembling said coupling device or said planetary gearset.

### Prior art

Various tools and components are known in the art for assembling two elements together such that they are axially coupled.

### Description of the invention

In a first aspect, the present disclosure relates to an assembly set for assembling a coupling device for providing an axial coupling between a first portion and a second portion that are arrangeable coaxially along an axial axis. The assembly set may comprise a collection of elements or components for assembling the coupling device. An axial coupling may comprise a coupling along an axial direction, for example a connection between the first portion and the second portion that prevents a relative movement along said axial direction. The axial direction may coincide with the axial axis, which may coincide with a central axis of the first portion and additionally or alternatively of the second portion. An axial coupling may provide a degree of axial play between the two portions or may not provide any play. The first and second portions may be parts of larger elements or structures, or may be individual elements. The first and second portions may be substantially rotationally symmetric along their central axes, and additionally or alternatively be substantially cylindrical. One of the portions may be arrangeable around the other. For example, the first portion may be concentrically arrangeable within the second portion. In some embodiments, the first portion may be formed by a shaft and the second portion may comprise a bore, wherein the shaft is arrangeable within the bore. Alternatively, the first portion may be arrangeable around the second portion.

The assembly set comprises the first portion, a retaining element and a mounting device, wherein the first portion comprises a recess configured to receive the retaining element. The recess may be an arranged on a surface of the first portion. For example, it may comprise a circumferential recess spanning a circumference of the first portion. In particular, it may be a recess that spans an entire surface of the shaft. The recess may be arranged towards an axial end of the first portion, for example between a main portion and a thinner end portion of the first portion. It may be radially wider or narrower than the surrounding portions of the first portion. The recess on the first portion may correspond to a recess on the second portion, for example be arrangeable concentrically to said recess of the second portion.

The retaining element may be configured to be arranged within the recess of the first portion. It may be an element configured to provide the axial coupling between the first portion and the second portion. The retaining element may be a retaining ring, for example a snap ring or a circlip, a key, or another mechanical element configured to provide an axial coupling. The retaining element may be configured to engage the second portion to provide the axial coupling, for example by reaching into a recess of the second portion. The recess may comprise a depth such that the retaining ring extends over a rim of the recess in a relaxed state, for example reaching into the recess of the second portion if the second portion is positioned around the first portion. The first portion further comprises at least one notch. The notch may be arranged at an axial end of the first portion, for example along a frontal surface of the shaft. The notch may be arranged along a circumference of the first portion, for example along the circumference of the shaft. The notch may extend in the direction of the axial axis.

The mounting device comprises at least one engagement finger for pressing the retaining element into the recess. The mounting device may be configured to enable an assembly of the coupling device by engaging the retaining element during the assembly. The engagement finger may form an axial projection from a main body of the mounting device. The engagement finger may be configured to impart a force perpendicular to the axial axis onto the retaining element when pressing it into the recess. The engagement finger may be configured to compress or expand the retaining element when pressing it into the recess. The mounting device may be substantially rotationally symmetric and additionally or alternatively may comprise a cylindrical shape. The mounting device may be releasably attachable to the first portion.

The shaft may comprise a protrusion, such as a shaft protrusion, that extends axially from the first portion. The protrusion may be configured to engage with a mounting hole of the mounting device to guide the mounting device onto the first portion to engage with the retaining element when both parts are moved relatively to each other in the direction of the axial axis. The mounting device may comprise a guiding section, which may be a post-processed surface that is configured to fit tightly with the protrusion of the first portion to axially guide the mounting device. The mounting device may be attachable to the first portion through the use of a screw and additionally or alternatively through other attachment means.

The notch extends towards the recess for guiding the engagement finger onto the retaining element when the mounting device is moved towards the first portion along the axial axis during the assembly of the coupling device. The shape of the notch may be matched to the shape of the engagement finger. The notch may comprise a triangular shape. The notch may be configured to circumferentially and additionally or alternatively axially guide the engagement fingers.

By providing an assembly set with the features described above, a quick and simple assembly of a coupling device is enabled. The assembly set for assembling the coupling device also comprises few parts, enabling a particularly simple and cheap coupling device. The coupling device may further be particularly compact, especially in a radial direction. It may not be necessary to provide any fastening on an outside of the coupling device, as the retaining element providing the axial coupling may be arranged within or in between the first and the second portion. By providing a first portion with notches, an assembly is further simplified, as the mounting device can be guided along these during the assembly.

In an embodiment, the recess comprises a groove configured to receive the retaining element, wherein the retaining element comprises a retaining ring. The groove may comprise an elongated shape. The groove may circumferentially span the entire first portion and comprise a ring shape. The retaining ring may be a ring-shaped element configured to provide the axial coupling. The retaining ring may comprise a gap and be approximately C-shaped for easing a compression or extension of the ring, thus enabling an easier placement in the groove. The retaining ring may be compressible during the assembly of the coupling device, such that it does not extend beyond the rim of the groove during the assembly. The retaining ring may be configured to expand after the assembly, such that it extends beyond the rim of the groove, for example to extend into the groove of the second portion and provide the axial coupling. The retaining ring may be configured to extend along substantially the entire circumference of the first portion. By providing an assembly set with a retaining ring and a corresponding groove, a particularly simple and quick assembly is enabled. The retaining ring may be particularly simple to place within the groove, simplifying the assembly process and reducing a proneness to error.

In an embodiment, the first portion forms an envelope surface radially delimiting the first portion. The first portion and the mounting device may be matched to each other such that the engagement finger does not radially extend beyond the envelope surface when placed in the notch and pressing the retaining element into the recess. The envelope surface may comprise a geometric limit and not comprise a physical element. The envelope surface may be a cylindrical surface that is arranged coaxially to the axial axis and extends infinitely along an axial direction. The envelope surface may extent until the radially outermost point of the first portion. Alternatively, the envelope surface may extend until the radially innermost point of the first portion. The mounting device may be configured to fit entirely within the envelope surface when pressing the retaining element into the recess. The mounting device may be configured to fit through a bore of the second portion during the assembly. Additionally or alternatively, the engagement finger may be configured to fit entirely within the envelope surface when pressing the retaining element into the recess. By providing a mounting device with an engagement finger which does not extend beyond the envelope surface, an assembly is simplified. For example, the second portion may be arranged coaxially with the first portion during an assembly without needing to remove the mounting device. The mounting device may fit within or around the second portion while still pressing the retaining element into the recess. A faster and simpler assembly is thus enabled.

In an embodiment, the first portion comprises a first set of teeth configured to mesh with a corresponding second set of teeth of the second element to provide a circumferential coupling for transmitting a torque for driving a vehicle. Through the teeth, a spline coupling between the first portion and the second portion for transmitting a torque may be provided. The first set of teeth may extend parallel to the axial axis and may span the entire circumference of the first portion. The second set of teeth may extend parallel to the axial axis and may span the entire circumference of the second portion. The first portion may be configured to be arranged within the second portion. The teeth of the first portion may be arranged on a shaft, such as a toothed shaft portion, and the teeth of the second portion may be arranged on a corresponding bore. The toothed shaft portion may be insertable into the bore and mesh with its teeth. The circumferential coupling may be configured to provide a torque transmission sufficient to drive the wheels of the vehicle and additionally or alternatively sufficient to receive the torque of an engine, for example an electric motor. The teeth may be interrupted by a groove described above and continue axially before and after the grooves. By providing teeth on the first portion, a circumferential coupling is enabled that is durable, simple to assemble, simple to manufacture, compact and cheap. Additionally, a lifetime of the coupling device may be increased as a circumferential slip movement is prevented. Through the features described, a durable and compact axial as well as circumferential coupling is provided.

In an embodiment, the notch comprises a gap in the first set of teeth. The gap may comprise a width in circumferential direction that substantially corresponds to the width of one tooth. The gap may comprise a width that substantially corresponds to a whole number multiple of the width of one tooth. The gap may radially extend until the base of the teeth. The gap may radially extend deeper than the base of the teeth, for example further towards the central axis of the first portion or further away from it. The gap may radially extent up to a limit of the groove. The area circumferentially around the gap may comprise teeth, for example teeth that correspond to or are a continuation of the teeth on a side of the first portion that is opposite to the groove in axial direction. The first portion may comprise multiple gaps. By providing a first portion with a gap in the teeth, a circumferential coupling between the first and the second portion may be improved while providing a guiding for the mounting device. By providing teeth between the gaps, more torque may be transmitted between the first and second portions.

In an embodiment, the mounting device comprises a plurality of engagement fingers and that the mounting device is substantially rotationally symmetric about a central axis. The engagement fingers may be arranged equidistantly along a circumference of the mounting device. The mounting device may comprise two, three, four, more or fewer engagement fingers. The number and location of notches may correspond to the number and location of engagement fingers. The engagement fingers may be configured to compress the retaining element when pressing it into the recess, for example by imparting a force onto it from multiple directions. Alternatively, the engagement fingers may be configured to expand the retaining element when pressing it into the recess, for example by imparting a force onto it from multiple directions. By providing a mounting device with multiple engagement fingers, a more solid and less error prone engagement of the retaining element may be provided. Thus, a simpler and quicker assembly may be enabled.

In an embodiment, the assembly set comprises an output shaft configured to transmit a torque and configured to be axially coupled with a planet carrier, the output shaft forming the first portion. The first portion may comprise the toothed shaft portion. It may be axially coupled with the planet carrier via the coupling device. The planet carrier may be configured to carry a set of planet gears. It may be configured to carry two, three, four, more or fewer planet gears. The planet carrier may be substantially rotationally symmetric. The planet carrier may be substantially produced by a single cast part. The planet carrier may form the second portion, which may comprise a cylindrical section that projects from the rest of the planet carrier. The cylindrical section may be monolithic with the planet carrier. To be monolithic may comprise being substantially formed by a single part, for example cast as a single part. The cylindrical section may be arranged along a central axis of the planet carrier, which may correspond to the axial axis. The cylindrical section may comprise a bore configured to receive the output shaft. The planet carrier may be configured to transmit a torque to the output shaft through the cylindrical section.

In a second aspect, the present disclosure relates to a planetary gearset assembled with an assembly set according to the previously described embodiment, comprising a first output shaft for driving a first wheel, a second output shaft for driving a second wheel and an input shaft for providing a torque of an engine. The planetary gearset may comprise a differential or be a part of a differential. The planetary gearset may comprise planet gears, ring gears, sun gears and additionally or alternatively further gears. The planetary gearset may comprise multiple subassembly-gearsets. The input shaft may be directly coupled with the engine. It may be indirectly coupled with it through a gearbox or additional gearing. The engine may be a combustion engine, an electric motor, a hybrid drive unit or a further type of engine. The input shaft may be a hollow shaft and arranged around the first or the second output shaft. The first and the second output shaft may be coaxial to one another. The first and additionally or alternatively the second output shaft may be coaxial to the input shaft.

The planetary gearset may be configured to distribute the torque from the input shaft to the two output shafts for driving the first and second wheels. The planetary gearset may allow the wheels to rotate at different rotational speeds, thus providing a differential function. One of the output shafts may form the first portion and may be axially coupled to the planet carrier forming the second portion. The output shaft and the planet carrier may be axially coupled via the coupling device. Further respective features, embodiments and advantages can be found in the descriptions of the first aspect. Conversely, features, embodiments and advantages of the second aspect also represent features, embodiments and advantages of the first aspect. By providing a planetary gearset with the mentioned features, a particularly compact mechanism for driving the wheels of a vehicle may be provided, in particular a compact differential.

In an embodiment the planetary gearset comprises a first planetary gearset and a second planetary gearset. The first planetary gearset comprises a first element, a second element and a third element. The first element may comprise a sun gear. The second element may comprise the planet carrier, which may carry planets which mesh with the sun gear. The planet carrier of the first planetary gearset may be part of the coupling device. The third element may comprise a sun-ring-gear and mesh with the planets carried on the planet carrier of the first planetary gearset. It may function as a ring gear within the first gearset. The second planetary gearset comprises a first element, a second element and a third element. The first element may comprise the sun-ring-gear and may function as a sun gear within the second planetary gearset. The second element may comprise a planet carrier, which may carry planets which mesh with the sun-ring-gear. The third element may comprise a ring gear and may mesh with the planets carried on the planet carrier of the second planetary gearset.

The first element of the first planetary gearset may be rotationally coupled to the input shaft. Two elements being rotationally coupled may comprise that a rotational movement of one element causes a rotational movement of the rotationally coupled other element. The input shaft may be arranged coaxially around the first output shaft and additionally or alternatively the second output shaft. The second element of the first gearset may be rotationally coupled to the first output shaft. It may be coupled to the first output shaft via the coupling device, wherein said second element may form the second portion and the first output shaft may form the first portion of said coupling device. The third element of the first planetary gearset may be rotationally coupled to the first element of the second planetary gearset. They may comprise a sun-ring-gear and may additionally or alternatively be formed as a single assembly or monolithically. The second element of the second planetary gearset may be non-rotatably fixed to a stationary component. The stationary component may comprise a housing of the planetary gearset. The third element of the second planetary gearset may be rotationally coupled to the second output shaft. The first planetary gearset and the second planetary gearset may be arranged concentrically to one another. For example, the second planetary gearset may be arranged around the first planetary gearset in radial direction.

In a third aspect, the present disclosure relates to a vehicle comprising a planetary gearset according to the second aspect. Further respective features, embodiments and advantages can be found in the descriptions of the first and the second aspect. Conversely, features, embodiments and advantages of the third aspect also represent features, embodiments and advantages of the first and the second aspect. The vehicle may comprise wheels, for example four wheels. The vehicle may be a vehicle used for the transport of people, for example a car. The vehicle may be an agricultural vehicle, for example a tractor. The vehicle may be heavy machinery, for example be a front loader. The planetary gearset may be configured to provide a differential functionality for the wheels of the vehicle. The planetary gearset comprises a coupling device assembled with the assembly described above.

In a fourth aspect, the present disclosure relates to a method for assembling the coupling device with an assembly set according to the first or the planetary gearset according to the second aspect. Further respective features, embodiments and advantages can be found in the descriptions of the first, the second and the third aspect. Conversely, features, embodiments and advantages of the fourth aspect also represent features, embodiments and advantages of the first, the second and the third aspect. The method comprises arranging the retaining element in the recess of the first portion. This may comprise inserting the retaining ring into the groove of the first portion. To insert the retaining ring into the groove may comprise first expanding it, for example through appropriate pliers, such that it may pass over the first portion. The retaining ring may then be moved into position and released, such that it fits into the groove. The method may comprise engaging the retaining element with the mounting device by reaching through the notch of the first portion with the engagement finger of the mounting device. Engaging the retaining element may comprise pressing it into the recess. It may comprise compressing the retaining ring such that it is pressed into the groove. Engaging the retaining element with the mounting device may comprise attaching it to the first portion, for example through the use of a screw or other means. This may comprise guiding the mounting device into position onto the first portion, for example by guiding it through the notches. This may also comprise guiding it over the shaft protrusion described above.

The method may further comprise positioning the first portion and the second portion coaxially to one another. Positioning the first and second portion may comprise positioning them into positions that correspond to the assembled coupling device. This may comprise positioning them concentrically to one another, for example positioning the second portion around the first portion. This may comprise moving the second portion over the mounting device, with the mounting device passing through the second portion. If the second portion comprises a groove, positioning the second portion around the first portion may comprise positioning it such that the groove of the second portion aligns with the groove of the first portion. The method may comprise disengaging the mounting device from the retaining element for establishing the axial coupling between the first portion and the second portion. Disengaging the mounting device may comprise detaching the mounting device, for example by unscrewing it from the first portion. Disengaging the mounting device may comprise no longer pressing the retaining element into the groove. This may comprise letting the retaining ring expand. Establishing the axial coupling between the first and second portion may comprise letting the retaining ring expand such that it fits into the grooves on the first portion and the second portion. It may comprise letting the retaining ring expand such that it presses against an engagement portion of the second portion, thereby providing an axial coupling.

The method may comprise further steps to release the axial coupling. Releasing the axial coupling may comprise attaching the mounting device to the shaft to engage the retaining element. This may be done using the steps already described, for example by attaching it to the first portion through a screw. The retaining element may thus be compressed and no longer engage the second portion, which can then be moved axially to disassemble the coupling device. Additionally or alternatively, the axial coupling may be disengaged by inserting appropriate pins into the notches, thus engaging the retaining element. This may comprise compressing the retaining ring with the pins. Insertion holes may be provided in the second portion and additionally or alternatively in the first portion for insertion of such pins.

The axial coupling may be released through the use of appropriate grub screws, which may be configured to compress the retaining ring. They may be screwed radially through the second portion until they engage the retaining element, releasing the coupling. For example, they may be screwed radially inwards from an outside of the cylindrical section of the second portion. Additionally or alternatively, the axial coupling may be released manually through the use of a screwdriver or other elongated tool. The screwdriver may be used to push the retaining element into the recess, for example compressing the retaining ring, until the coupling is released. The first portion and the second portion may then be separated. By providing a method with the described features, a particularly simple and quick assembly and optionally disassembly with the assembly set is provided. The method may be particularly reliable and not be prone to errors. The assembly may be performed without the need of additional specialized tools.

### Brief description of the figures

Fig. 1 shows a cross section of an assembly set for assembling a coupling device according to the present disclosure.
Fig. 2 shows a shaft of the coupling device Fig. 1 with a retaining ring.
Fig. 3 shows a mounting device of the assembly set of Fig. 1.
Fig. 4 schematically shows a planetary gearset assembled with the assembly set of Fig. 1.
Fig. 5 schematically shows a method for assembling the planetary gearset shown in Fig. 4.
Fig. 6 schematically shows a vehicle with the planetary gearset of Fig. 4.

### Detailed description of the figures

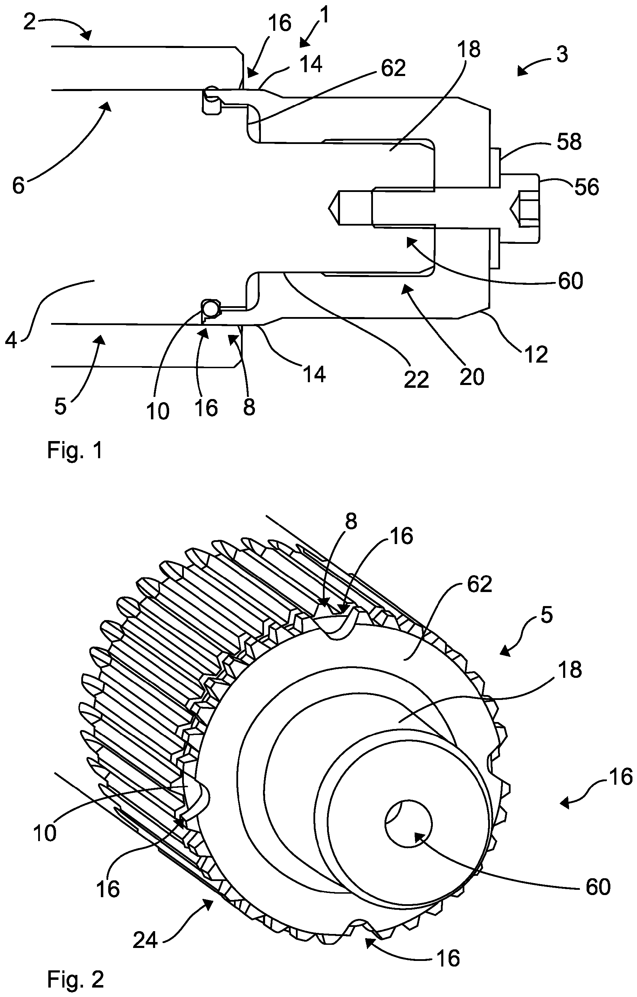

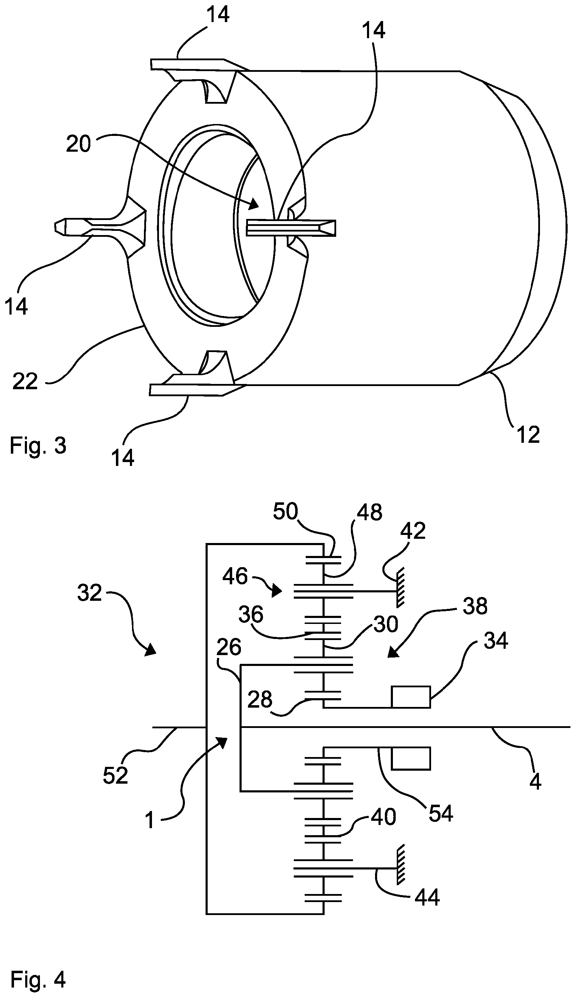

Fig. 1 shows a cross section of an assembly set 3 for assembling a coupling device 1 according to the present disclosure. The assembly set 3 comprises a first portion, provided by a shaft 4 with a toothed shaft portion 5, a retaining element provided by a retaining ring 10 and a mounting device 12. A cylindrical section 2 forming a second portion is arranged concentrically around the shaft 4. The cylindrical section 2 is formed by a planetary carrier 26, which is schematically shown in Fig. 4. The shaft 4 and the cylindrical section 2 are arranged around an axial axis, which coincides with a central axis of these components.

The shaft 4 is substantially rotationally symmetric around the axial axis. It comprises a toothed shaft portion 5 with shaft teeth 24 at the axial end shown in Fig. 1. The shaft teeth 24 are shown in detail in Fig. 2. The shaft teeth 24 are configured to mesh with a corresponding set of teeth of the cylindrical section 2, which are not shown here, to provide a spline coupling. The shaft teeth 24 are aligned along the direction of the axial axis. The toothed shaft portion 5 comprises a groove 8, which is arranged coaxially to the shaft 4 and spans its entire circumference. The groove 8 is configured to receive the retaining ring 10. The retaining ring 10 is substantially ring shaped and comprises a gap, resembling a C-shape. The gap enables a compression and extension of the retaining ring 10, enabling an easy placement and removal from the groove 8.

The toothed shaft portion 5 comprises four notches 16, which comprise gaps in the teeth 24. They extend parallel to the axial axis from the groove 8 to a frontal surface 62 of the shaft 4. The notches 16 corresponds to engagement fingers 14 of the mounting device 12 and are configured to guide the mounting device 12 onto the retaining ring 10 when it is positioned in the groove 8 as will be described below. The notches 16 comprise a radial depth that is less than the radial depth of the groove 8.

The shaft 4 comprises a cylindrical shaft protrusion 18, which is coaxial to the axial axis and extends from the frontal surface 62 of the shaft 4. The shaft protrusion 18 has a smaller diameter than the toothed shaft portion 5 of the shaft 4. It is configured to guide the mounting device 12 onto the retaining ring 10 and through the notches 16 for assembling the coupling device 1. The shaft protrusion 18 comprises a threaded hole 60 which is configured to engage with a screw 56 to enable an attachment of the mounting device 12 to the shaft 4. The axial length of the shaft protrusion 18 is matched to the mounting device 12 such that it is correctly positioned axially when an end surface of a mounting hole 20 is in contact with a frontal surface of the shaft protrusion 18.

The mounting device 12 is substantially rotationally symmetric about a central axis, which corresponds to the axial axis when the mounting device 12 is attached to the shaft 4. The mounting device 12 comprises four engagement fingers 14 which project from a main body along an axial direction. The engagement fingers 14 are positioned equidistantly around the circumference of the mounting device 12 and are configured to press the retaining ring 10 into the groove 8, thereby compressing it and reducing its diameter. In the cross section shown in Fig. 1, two of the engagement fingers 14 can be seen compressing the retaining ring 10. The mounting device 12 further comprises the mounting hole 20 which is configured to receive the shaft protrusion 18 during an assembly of the coupling device 1, as shown here. The mounting hole 20 comprises a guiding section 22 which is configured to engage with an outer surface of the shaft protrusion 18 to guide the mounting device 12. In the shown embodiment, the guiding section 22 is post-processed to ensure a tight fit between the mounting device 12 and the shaft protrusion 18.

The mounting device 12 is attached to the shaft 4 through a screw 56, which passes through the mounting device into the threaded hole 60 and pushes the mounting device 12 onto the shaft protrusion 18 via a washer 58. In the state shown in Fig. 1, the mounting device 12 is engaging the retention ring 10. To remove the mounting device 12 and disengage the retention ring 10, the screw 56 can be unscrewed and the mounting device 12 can be moved axially until it no longer engages the retention ring 10.

The toothed shaft portion 5 of the shaft 4 forms a cylindrical envelope surface that is coaxial to the axial axis and extends radially to the radially outermost point of the shaft teeth 24. The envelope surface is a geometric delimitation and extends infinitely along an axial direction parallel to the axial axis. The envelope surface is not shown here. The mounting device 12 is matched to the shaft 4 such that the engagement fingers 14 do not radially extend beyond the envelope surface. Thus, the cylindrical section 2 forming the second portion of the coupling device 1 can be arranged around the toothed shaft portion 5 for assembling the coupling device 1 while the mounting device 12 engages the retaining ring 10.

Fig. 2 shows a perspective view of the shaft 4 with the retaining ring 10 mounted in the groove 8. The shaft 4 corresponds to the shaft shown in Fig. 1. It can be seen that the teeth 24 of the toothed shaft portion 5 extend from the frontal surface 62 parallel to the axial axis along the shaft 4. The teeth 24 are interrupted by the groove 8. The thin section between the groove 8 and the frontal surface 62 also forms part of the toothed shaft portion 5 and comprises the teeth 24. The teeth 24 are interrupted here by the four notches 16, which are distributed equally along the circumference of the shaft 4. Each notch 16 corresponds to one missing tooth. Axially beyond the toothed shaft portion 5, the surface of the shaft 4 is substantially smooth.

Fig. 3 shows a perspective view of the mounting device 12 of Fig. 1. The mounting device 12 is rotationally symmetric along its central axis and comprises four engagement fingers 14 which are equally distributed along its circumference as described above. The engagement fingers 14 correspond to the notches 16 on the shaft 4, have free ends and extend from a cylindrical main body. The mounting hole 20 is shown, as well as the guiding section 22 which is arranged around the opening of the mounting hole 20.

Fig. 4 schematically shows a planetary gearset 32 assembled with the assembly set 3 of Fig. 1. The shaft 4 is coupled with the planet carrier 26, with the details of the coupling device 1 not shown here. The planetary gearset 32 comprises a first output shaft, provided by the shaft 4, and a second output shaft 52. The first output shaft 4 and the second output shaft 52 are each configured to drive a first wheel and a second wheel of a vehicle, respectively. The planetary gearset 32 further comprises an input shaft 54, which is coupled to an engine 34, provided here by an electric motor. The input shaft 54 is configured to distribute a torque from the engine 34 to the two output shafts 4, 52 for driving the vehicle. The planetary gearset 32 is configured to provide a differential functionality allowing the two output shafts to rotate at different rotational speeds. In addition, the planetary gearset 32 is configured to provide a transmission functionality for transmitting a torque at the input shaft to the two output shafts with a transmission ration, e.g. a transmission ratio larger 1.

The planetary gearset 32 comprises a first planetary gearset 38 and a second planetary gearset 46, which are arranged coaxial to one another, with the first planetary gearset 38 arranged radially before the second gearset 46. A first element of the first planetary gearset 38, in this case a sun gear 28, is rotationally coupled to the input shaft 54. A second element, in this case the planet carrier 26 of the first planetary gear set 38, is rotationally coupled to the first output shaft 4. A third element of the first planetary gearset 38, in this case a ring gear 36, is rotationally coupled to a first element of the second planetary gearset 46, in this case a sun gear 40. In the present embodiment, the ring gear 36 of the first planetary gearset 38 and the sun gear 40 of the second planetary gearset 46 are designed as a sun-ring-gear, which is formed as a single component. A second element of the second planetary gearset 46, in the present case a planet carrier 44, is non-rotatably fixed to a stationary component so that it cannot rotate. The stationary component is provided here by a housing 42 of the planetary gearset 32. A third element of the second planetary gearset 46, in this case a ring gear 50, is rotationally coupled to the second output shaft 52. Planet gears 30 and 48 are provided on the planet carrier 26 of the first planetary gearset 38 and on the planet carrier 44 of the second planetary gearset 46. They are connected to the respective sun gears 28, 40 and the respective ring gears 36, 50 of the first 38 and second planetary gearsets 46.

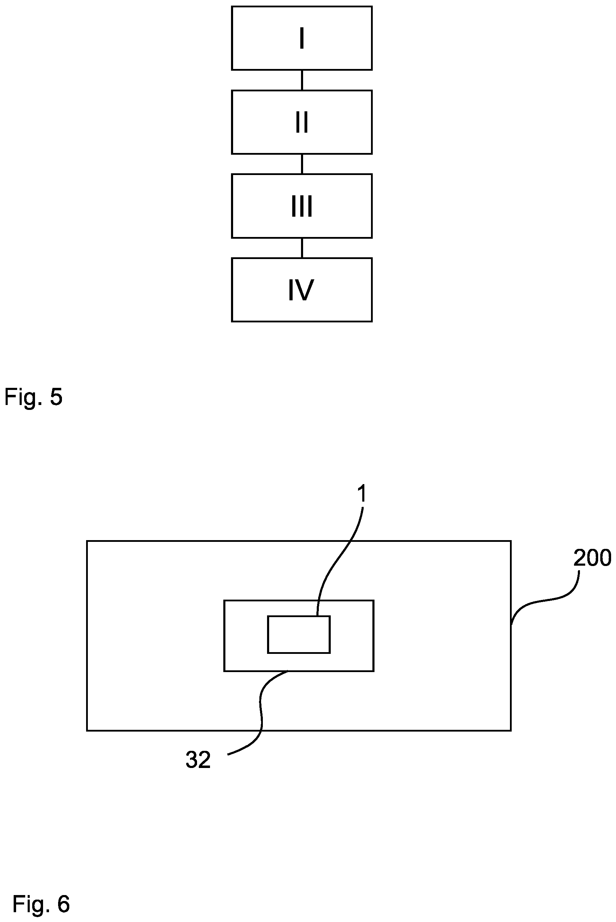

Fig. 5 schematically shows a method for assembling the planetary gearset 32 shown in Fig. 4, in particular its coupling device 1 shown in Fig. 1. The method comprises arranging I the retaining ring 10 in the groove 8 of the shaft 4. This can comprise expanding the retaining ring 10, for example through the use of pliers or other tools, to fit it over the shaft 4 to mount it into the groove 8. Mounting can also comprise a subsequent releasing of the retaining ring 10 once it is positioned within the groove 8. The retaining ring 10 can be configured such that an outer edge expands over the rim of the groove 8 in the relaxed state, such that it can engage the cylindrical section 2 when it is arranged around the shaft 4.

The method further comprises engaging II the retaining ring 10 with the mounting device 12 by reaching through the notches 16 of the toothed shaft portion 5 with the engagement fingers 14 of the mounting device 12. This comprises attaching the mounting device 12 to the shaft 4 by moving the mounting device 12 over the shaft protrusion 18, until it contacts the frontal surface of the shaft protrusion 18. During the axial movement, the mounting device 12 is guided in axial direction by the guiding section 22 in contact with the shaft protrusion 18. The mounting device 12 is also guided circumferentially by the notches 16, which guide the engagement fingers 14. The mounting device 12 is then attached to the shaft protrusion 18 through the washer 58 and the screw 56, ensuring that it does not move during the further assembly. The mounting device 12 engages the retaining ring 10 with each engagement finger 14, compressing it and pushing it into the groove 8.

The method further comprises positioning III the shaft 4 and the cylindrical section 2 coaxially to one another. This comprises moving the cylindrical section 2 over the shaft 4 with the attached mounting device 12 until it is in a position as shown in Fig. 1. If the cylindrical section 2 comprises a further groove for the retaining ring 10, this may comprise moving the cylindrical section until both grooves are concentric to one another. This may also comprise meshing the teeth 24 of the shaft 4 with the teeth of the cylindrical section 2, ensuring a circumferential coupling as described above.

The method further comprises disengaging IV the mounting device 12 from the retaining ring 10 for establishing the axial coupling between the toothed shaft portion 5 and the cylindrical section 2. This comprises unscrewing the screw 56 and removing the mounting device 12. This causes the retaining ring 10 to expand and engage with the cylindrical section 2 to provide the axial coupling.

Fig. 6 schematically shows a vehicle 200 with the planetary gearset 32 of Fig. 4. The vehicle 200 shown here is a tractor. The planetary gearset 32 comprises the coupling device 1. The planetary gearset 32 is configured to provide a differential functionality and transmit a torque to the wheels of the vehicle 200.

### Reference signs

1 coupling device
2 cylindrical section
3 assembly set
4 shaft
5 toothed shaft portion
6 shaft bore
8 groove
10 retaining ring
12 mounting device
14 engagement finger
16 notch
18 shaft protrusion
20 mounting hole
22 guiding section
24 shaft teeth
26, 44 planet carrier
28, 40 sun gear
30, 48 planet gear
32 planetary gearset
34 engine
36, 50 ring gear
38, 46 gearset
42 housing
52 second output shaft
54 input shaft
56 screw
58 washer
60 threaded hole
62 frontal surface
200 vehicle
I arranging retaining ring in groove
II engaging retaining ring with mounting device
III positioning shaft and cylindrical section
IV disengaging mounting device

## Claims

1. An assembly set (3) for assembling a coupling device (1) for providing an axial coupling between a first portion (5) and a second portion (2) that are arrangeable coaxially along an axial axis, the assembly set (3) comprising the first portion (5), a retaining element (10) and a mounting device (12), wherein the first portion (5) comprises a recess (8) configured to receive the retaining element (10) and at least one notch (16), wherein the mounting device (12) comprises at least one engagement finger (14) for pressing the retaining element (10) into the recess (8), and wherein the notch (16) extends towards the recess (8) for guiding the engagement finger (14) onto the retaining element (10) when the mounting device (12) is moved towards the first portion (5) along the axial axis during the assembly of the coupling device (1).

2. The assembly set (3) according to claim 1, **characterized in that** the recess (8) comprises a groove (8) configured to receive the retaining element (10), and wherein the retaining element (10) comprises a retaining ring (10).

3. The assembly set (3) according to claim 1 or 2, **characterized in that** the first portion (5) forms an envelope surface radially delimiting the first portion (5), and **in that** the first portion (5) and the mounting device (12) are matched to each other such that the engagement finger (14) does not radially extend beyond the envelope surface when placed in the notch (16) and pressing the retaining element (10) into the recess (8).

4. The assembly set (3) according to one of the preceding claims, **characterized in that** the first portion (5) comprises a first set of teeth (24) configured to mesh with a corresponding second set of teeth of the second element (2) to provide a circumferential coupling for transmitting a torque for driving a vehicle.

5. The assembly set (3) according to claim 4, **characterized in that** the notch (16) comprises a gap (16) in the first set of teeth (24).

6. The assembly set (3) according to one of the previous claims, **characterized in that** the mounting device (12) comprises a plurality of engagement fingers (14) arranged equidistantly about a central axis.

7. The assembly set (3) according to one of the preceding claims, **characterized in that** the assembly set (3) comprises an output shaft (4) configured to transmit a torque and configured to be axially coupled with a planet carrier (26), the output shaft (4) forming the first portion (5).

8. A planetary gearset (32) assembled with an assembly set (3) according to claim 7, the planetary gearset (32) comprising a first output shaft (4) for driving a first wheel, a second output shaft (52) for driving a second wheel and an input shaft (54) for providing a torque of an engine (34), the planetary gearset (32) being configured to distribute the torque from the input shaft (54) to the two output shafts (4, 52) for driving the first and second wheels, wherein one of the output shafts (4; 52) forms the first portion (5) and is axially coupled to the planet carrier (26) forming the second portion.

9. The planetary gearset (32) according to claim 8, **characterized in that** the planetary gearset (32) comprises a first planetary gearset (38) and a second planetary gearset (46), the first planetary gearset (38) comprising a first element (28), a second element (26) and a third element (36) and the second planetary gearset (46) comprising a first element (40), a second element (44) and a third element (50), wherein the first element (28) of the first planetary gearset (38) is rotationally coupled to the input shaft (54), the second element (26) of the first planetary gearset (38) is rotationally coupled to the first output shaft (4), the third element (36) of the first planetary gear set (38) is rotationally coupled to the first element (40) of the second planetary gearset (46), the second element (44) of the second planetary gearset (46) is non-rotatably fixed to a stationary component (42), and the third element (50) of the second planetary gearset (46) is rotationally coupled to the second output shaft (52).

10. Vehicle comprising a planetary gearset (32) according to claim 8 or 9.

11. A method for assembling a coupling device (1) with an assembly set (3) according to one of the claims 1 to 7 or one of the planetary gearsets (32) of claims 8 or 9, comprising the steps of arranging (I) the retaining element (10) in the recess (8) of the first portion (5), engaging (II) the retaining element (10) with the mounting device (12) by reaching through the notch (16) of the first portion (5) with the engagement finger (14) of the mounting device (12), positioning (III) the first portion (5) and the second portion (2) coaxially to one another, and disengaging (IV) the mounting device (12) from the retaining element (10) for establishing the axial coupling between the first portion (5) and the second portion (2).

## Amended claims

### Amended claims in accordance with Rule 137(2) EPC.

1. An assembly set (3) for assembling a coupling device (1) for providing an axial coupling between a first portion (5) and a second portion (2) that are arrangeable coaxially along an axial axis, the assembly set (3) comprising the first portion (5), a retaining element (10) and a mounting device (12), wherein the first portion (5) comprises a recess (8) configured to receive the retaining element (10) and at least one notch (16), wherein the mounting device (12) comprises at least one engagement finger (14) for pressing the retaining element (10) into the recess (8), wherein the notch (16) extends towards the recess (8) for guiding the engagement finger (14) onto the retaining element (10) when the mounting device (12) is moved towards the first portion (5) along the axial axis during the assembly of the coupling device (1), and wherein the mounting device (12) may fit within or around the second portion (2) while pressing the retaining element (10) into the recess (8).

2. The assembly set (3) according to claim 1, **characterized in that** the recess (8) comprises a groove (8) configured to receive the retaining element (10), and wherein the retaining element (10) comprises a retaining ring (10).

3. The assembly set (3) according to claim 1 or 2, **characterized in that** the first portion (5) forms an envelope surface radially delimiting the first portion (5), and **in that** the first portion (5) and the mounting device (12) are matched to each other such that the engagement finger (14) does not radially extend beyond the envelope surface when placed in the notch (16) and pressing the retaining element (10) into the recess (8).

4. The assembly set (3) according to one of the preceding claims, **characterized in that** the first portion (5) comprises a first set of teeth (24) configured to mesh with a corresponding second set of teeth of the second element (2) to provide a circumferential coupling for transmitting a torque for driving a vehicle.

5. The assembly set (3) according to claim 4, **characterized in that** the notch (16) comprises a gap (16) in the first set of teeth (24).

6. The assembly set (3) according to one of the previous claims, **characterized in that** the mounting device (12) comprises a plurality of engagement fingers (14) arranged equidistantly about a central axis.

7. The assembly set (3) according to one of the preceding claims, **characterized in that** the assembly set (3) comprises an output shaft (4) configured to transmit a torque and configured to be axially coupled with a planet carrier (26), the output shaft (4) forming the first portion (5).

8. A planetary gearset (32) assembled with an assembly set (3) according to claim 7, the planetary gearset (32) comprising a first output shaft (4) for driving a first wheel, a second output shaft (52) for driving a second wheel and an input shaft (54) for providing a torque of an engine (34), the planetary gearset (32) being configured to distribute the torque from the input shaft (54) to the two output shafts (4, 52) for driving the first and second wheels, wherein one of the output shafts (4; 52) forms the first portion (5) and is axially coupled to the planet carrier (26) forming the second portion.

9. The planetary gearset (32) according to claim 8, **characterized in that** the planetary gearset (32) comprises a first planetary gearset (38) and a second planetary gearset (46), the first planetary gearset (38) comprising a first element (28), a second element (26) and a third element (36) and the second planetary gearset (46) comprising a first element (40), a second element (44) and a third element (50), wherein the first element (28) of the first planetary gearset (38) is rotationally coupled to the input shaft (54), the second element (26) of the first planetary gearset (38) is rotationally coupled to the first output shaft (4), the third element (36) of the first planetary gear set (38) is rotationally coupled to the first element (40) of the second planetary gearset (46), the second element (44) of the second planetary gearset (46) is non-rotatably fixed to a stationary component (42), and the third element (50) of the second planetary gearset (46) is rotationally coupled to the second output shaft (52).

10. Vehicle comprising a planetary gearset (32) according to claim 8 or 9.

11. A method for assembling a coupling device (1) with an assembly set (3) according to one of the claims 1 to 7 or one of the planetary gearsets (32) of claims 8 or 9, comprising the steps of arranging (I) the retaining element (10) in the recess (8) of the first portion (5), engaging (II) the retaining element (10) with the mounting device (12) by reaching through the notch (16) of the first portion (5) with the engagement finger (14) of the mounting device (12), positioning (III) the first portion (5) and the second portion (2) coaxially to one another, and disengaging (IV) the mounting device (12) from the retaining element (10) for establishing the axial coupling between the first portion (5) and the second portion (2).
